Europäisches Patentamt

European Patent Office

Office européen des brevets

(11) Publication number: **0 106 360**
**A2**

# EUROPEAN PATENT APPLICATION

(21) Application number: 83110385.8

(22) Date of filing: 18.10.83

(51) Int. Cl.³: **B 60 K 26/04**

(30) Priority: 19.10.82 JP 182066/82

(43) Date of publication of application:
25.04.84 Bulletin 84/17

(84) Designated Contracting States:
DE FR GB

(71) Applicant: NISSAN MOTOR COMPANY, LIMITED
No.2, Takara-cho, Kanagawa-ku
Yokohama-shi Kanagawa-ken 221(JP)

(72) Inventor: Murakami, Terukiyo
92, Urago-cho 2-chome Yokosuka-shi
Kanagawa-ken(JP)

(74) Representative: Patentanwälte TER MEER - MÜLLER -
STEINMEISTER
Triftstrasse 4
D-8000 München 22(DE)

(54) Accelerator pedal control system for automotive vehicle.

(57) Accelerator pedal control characteristics representative of relationship between throttle valve opening rate and accelerator pedal stroke can be selected freely by driver's preference. Therefore, when the vehicle is travelling at a low speed on a busy street and the accelerator pedal and the brake pedal are both repeatedly depressed alternately, the driver accelerates the vehicle in accordance with a control characteristic on which the throttle valve opening rate increases gently with increasing accelerator pedal stroke; when the vehicle is travelling at a high speed on a highway, the driver accelerates the vehicle in accordance with another control characteristic on which the throttle valve opening rate increases relatively abruptly with increasing accelerator pedal stroke, thus improving the operability of the accelerator pedal according to vehicle travelling conditions.

The system comprises means (14) for storing a plurality of different predetermined control characteristics representative of relationship between throttle valve opening rate and accelerator pedal stroke, means (10) for selecting a desired control characteristic from the stored different control characteristics, means (11) for detecting the stroke of the accelerator pedal, means (14) for determining throttle valve opening rates corresponding to the detected accelerator pedal stroke S on the basis of the stored control characteristic selected by said selecting means and means (16,17) for driving the throttle valve to the determined throttle valve opening rate for each detected accelerator pedal stroke.

FIG.3

## DESCRIPTION

The present invention relates generally to an accelerator pedal control system for an automotive vehicle and more specifically to a control system by which accelerator pedal control characteristic representative of relationship between throttle valve opening rate and accelerator pedal stroke can be selected manually according to driver's preference or vehicle travelling conditions.

In an automotive vehicle, when an accelerator pedal is depressed by the driver, a throttle valve disposed in a carburetor is opened to accelerate the vehicle. Conventionally, the relationship between the stroke of the accelerator pedal depressed by the driver and the opening rate of the throttle valve is fixedly predetermined in dependence upon the structure of the throttle device.

For instance, in the case of a 50 cm-dia. single barrel throttle device, because the throttle valve opening rate is predetermined to be roughly linear in proportion to the accelerator pedal stroke, throttle valve opening rate increases relatively abruptly with increasing accelerator pedal stroke.

This accelerator pedal control characteristic is suitable for accelerating the vehicle quickly, for instance, to avert danger when the vehicle is travelling at a high speed on a highway. However, this is not suitable for repeatedly and finely driving the vehicle a little forward slowly when the vehicle is travelling at a low speed on a busy street. In contrast with this, in the case of a 50 cm-dia. twin barrel throttle device, because the throttle valve opening rate is predetermined to be delayed according to the accelerator pedal stroke, throttle valve opening rate increases relatively gently with increasing accelerator pedal stroke. Therefore, the accelerator pedal control characteristic is suitable for repeatedly and finely driving the vehicle a little forward slowly when the vehicle is travelling at a low speed on a busy street. However, it is not suitable for accelerating the vehicle quickly to avert danger when the vehicle is travelling at a high speed on a highway.

That is to say, in the conventional accelerator device, it is impossible to freely obtain an appropriate accelerator pedal control characteristic indicative of relationship between throttle valve opening rate and accelerator pedal stroke according to driver's preference or vehicle travelling conditions.

A more detailed description of the prior-art accelerator device for an automotive vehicle will be described with reference to the attached drawings under DETAILED DESCRIPTION OF THE PREFERRED EMBODIMENTS.

With these problems in mind, therefore, it is the primary object of the present invention is to provide an accelerator pedal control system for an automotive vehicle by which any appropriate accelerator pedal control characteristics representative of relationship between throttle valve opening rate and accelerator pedal stroke can be selected freely by driver's preference according to vehicle travelling conditions.

Further, it is the other object of the present invention to provide an accelerator pedal control system for an automotive vehicle by which accelerator pedal control characteristics can further be modified by driver's preference.

To achieve the above-mentioned object, the accelerator pedal control system for an automotive vehicle according to the present invention comprises means for storing a plurality of different predetermined control characteristics representative of relationship between throttle valve opening rate and accelerator pedal stroke, means for selecting a desired control characteristic from the stored different control characteristics by driver's preference, means for detecting the stroke of an accelerator pedal, means for determining throttle valve opening rates corresponding to the detected accelerator pedal strokes on the basis of the stored control characteristic selected by the selecting means and means for driving a throttle valve to the determined throttle valve opening rate for each detected accelerator pedal stroke. Additionally, the accelerator pedal control system according to the present invention further comprises means for manually modifying the different predetermined control characteristics by driver's preference by adjusting throttle valve opening rate for each accelerator pedal stroke.

Therefore, when the vehicle is travelling at a low speed on a busy street and the accelerator pedal and the brake pedal are both repeatedly depressed alternately, the driver can accelerate the vehicle in accordance with a control characteristic on which the throttle valve opening rate increases relatively gently with increasing accelerator pedal stroke; when the vehicle is travelling at a high speed on a highway, the driver can accelerate the vehicle in accordance with another control characteristic on which the throttle valve opening rate increases relatively abruptly with increasing accelerator pedal stroke. That is to say, the operability of the accelerator pedal can be improved according to vehicle travelling conditions.

The features and advantages of the accelerator pedal control system for an automotive vehicle according to the present invention over the prior-art accelerator device will be more clearly appreciated from the following

- 5 -

0106360

description taken in conjunction with the accompanying drawings in which like reference numeral designate corresponding elements and in which:

Fig. 1 is a pictorial illustration showing an example of the structure of a prior-art accelerator device;

Fig. 2 is a graphical representation showing examples of the accelerator pedal control characteristics, that is, the relationships betweeen accelerator pedal stroke, throttle valve opening rate and projected throttle valve opening area for a single barrel carburetor and a twin barrel carburetor, respectively, used with prior-art accelerator devices;

Fig. 3 is a schematic block diagram of a first embodiment of the accelerator pedal control system according to the present invention;

Fig. 4 is a pictorial illustration showing an exemplary throttle valve driving structure used with the accelerator pedal control system according to the present invention;

Fig. 5 is a pictorial illustration showing an exemplary acclerator pedal stroke detecting structure used with the accelerator pedal control system according to the present invention;

Fig. 6 is a graphical representation showing various accelerator pedal control characteristics, that is, the relationship between accelerator pedal stroke, throttle valve opening rate and projected throttle valve opening area for a carburetor used with the first embodiment of the accelerator pedal control system according to the present invention;

Fig. 7 is another similar graphical representation showing the various accelerator pedal control characteristics and explaining the method of obtaining the relationship between the accelerator pedal stroke and the throttle valve opening rate corresponding to the various control characteristics;

Fig. 8 is a program control flowchart showing the control steps of the accelerator pedal control system according to the present invention;

Fig. 9 is a schematic block diagram of a second embodiment of the accelerator pedal control system according to the present invention; and

Fig. 10 is a graphical representation showing the accelerator pedal control characteristics, that is, the relationships between accelerator pedal stroke, throttle valve opening rate and projected throttle valve opening area for a carburetor used with the second embodiment of the accelerator pedal control system according to the present invention, in which the opening rate is modified and stored at six divided accelerator pedal stroke positions.

To facilitate understanding of the present invention, a brief reference will be made to a prior-art accelerator device for an automotive vehicle, with reference to the attached drawings.

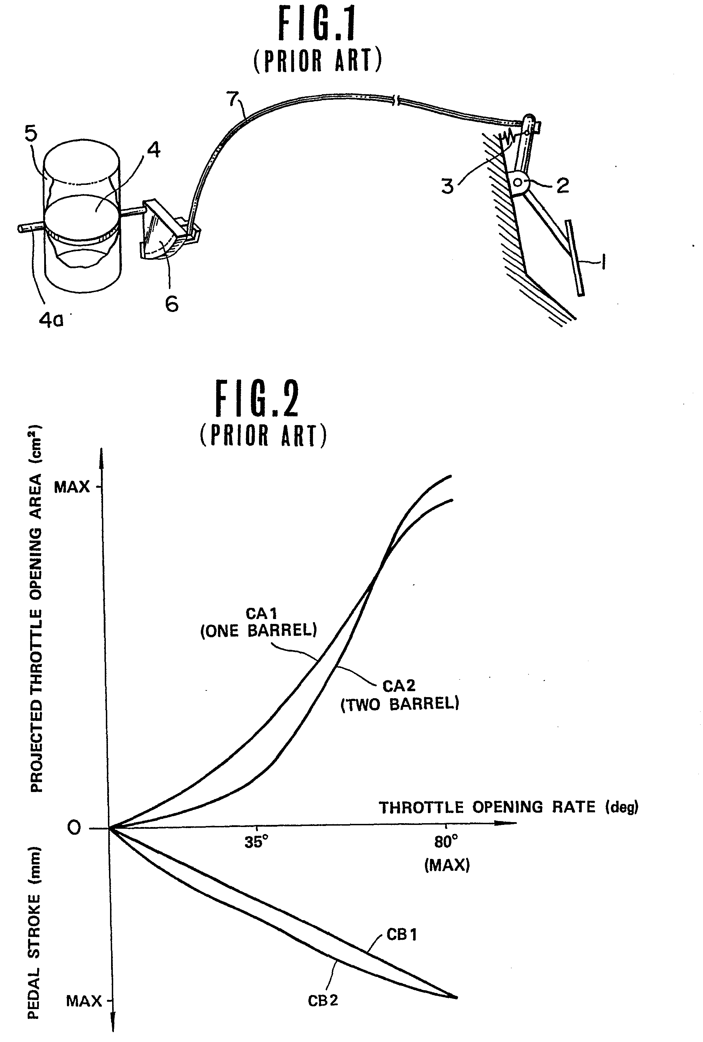

In Fig. 1, an accelerator pedal 1 is fixed to one end of a bracket 2 pivotably supported on a vehicle body. The accelerator pedal 1 is set to an idling position by the elastic force of a return spring 3. On the other hand, a throttle valve 4 is installed in a throttle chamber 5 so as to be pivotable about a throttle shaft 4a to which a drum 6 is fixed. Further, one end of a wire 7 is fixed to the other of the bracket 2 and the other end of the wire 7 is fixed to the drum 6, so that the opening rate of the throttle valve 4 may mechanically be adjusted as the accelerator pedal 1 is depressed by the driver.

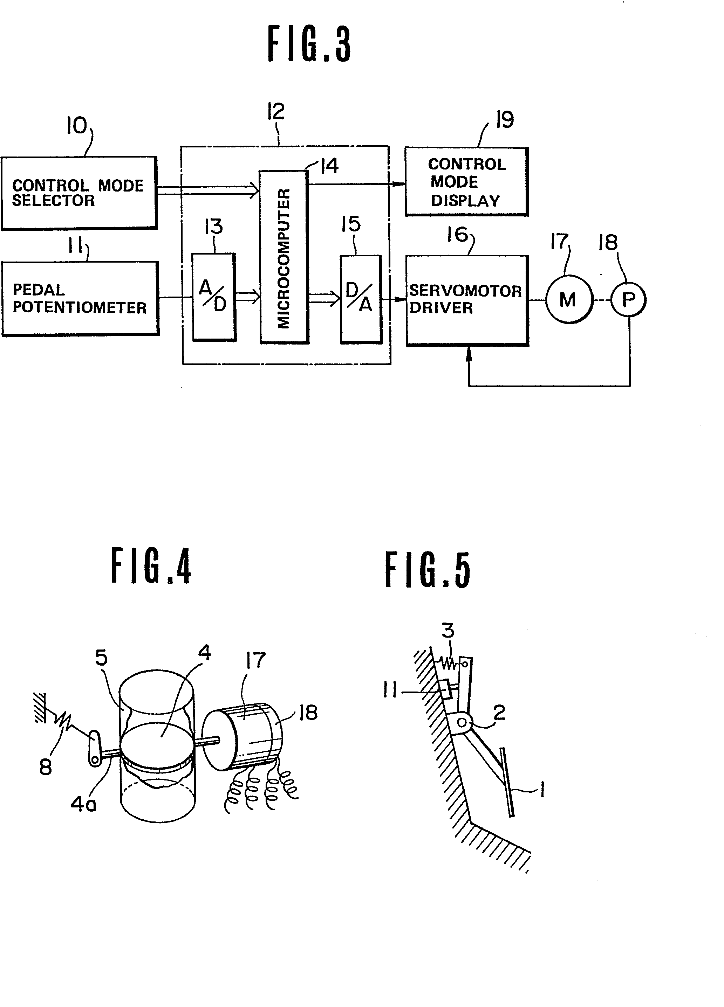

In the prior-art mechanical device, the relationship between throttle valve opening rate and accelerator pedal stroke is fixedly determined in dependence upon the mechanical structure thereof as depicted in Fig. 2. In more detail, in the case of a 50-cm dia. one barrel throttle valve device of linear drum type (barrel means herein a cylindrical portion of a carburetor), the relationship between throttle valve opening rate and projected throttle valve opening area is predetermined as depicted by the curve CA1; the relationship between throttle valve opening rate and accelerator pedal stroke is predetermined as depicted by the curve CB1, for instance, respectively. Further, in the case of 50-cm dia. two barrel throttle valve device of delayed-open type, the relationship between throttle valve opening rate and projected throttle valve opening area is predetermined as depicted by the curve CA2; the relationship between throttle valve opening rate and accelerator pedal stroke is predetermined as depicted by the curve CB2, for instance, respectively. In other words, these accelerator pedal control characteristics with respect to the accelerator pedal stroke are fixedly and unselectably or unadjustably predetermined according to the types of throttle device.

Therefore, as is well understood by the curves CA1 and CB1, since the accelerator pedal control characteristics (accelerator pedal stroke-throttle valve opening rate-projected throttle valve opening rate) are roughly linear in the case of the 50-cm dia. one barrel throttle valve device (linear drum type), these control characteristics are appropriate when the vehicle is travelling at a relatively high speed on a highway but not appropriate when the vehicle is travelling at a relatively low speed on a busy street. This is because the throttle valve opening rate increases too abruptly with increasing accelerator pedal stroke. In more detail, when the vehicle is travelling at a high speed on a highway, since the driver sometimes needs to quickly accelerate the vehicle in order to avert an accident, these control characteristics are suitable; however, when the vehicle is travelling at a low speed on a busy street, since the driver often needs to repeatedly accelerate the vehicle a little forward, these control characteristics are not suitable because it is rather difficult for the driver to depress the accelerator pedal finely and skillfully.

On the other hand, as is well understood by the curves CA2 and CB2, since the accelerator pedal control characteristics are delayed in the case of the 50-cm dia. two barrel throttle valve device, these characteristics are appropriate when the vehicle is travelling at a relatively low speed on a busy street but not appropriate when the vehicle is travelling at a relatively high speed on a highway. This is because the throttle valve opening rate increases too gently with increasing accelerator pedal stroke and therefore the driver must depress the accelerator pedal deeply or excessively when accelerating the vehicle quickly on a highway to avert an accident, for instance.

In summary, in the prior-art throttle device for an automotive vehicle, there exists a problem in that it is impossible to obtain an appropriate accelerator pedal control characteristics according to vehicle travelling conditions or driver's preference.

In view of the above description, reference is now made to a first embodiment of an accelerator pedal control system for an automotive vehicle according to the present invention.

With reference to Fig. 3, the accelerator pedal

·control system according to the present invention comprises a control mode selector switch 10 for selecting one of a plurality of previously stored accelerator pedal control characteristics, an accelerator pedal potentiometer 11 for detecting the stroke of the accelerator pedal, a control unit 12 made up of an analog-to-digital converter 13, a microcomputer 14 and a digital-to-analog converter 15, a servomotor driver curcuit 16, a servomotor 17 for driving a throttle valve, a valve potentiometer 18 for detecting the opening rate of the throttle valve and a control mode display 19 for displaying the control mode selected by the control mode selector switch 10.

The analog-to-digital converter 13 converts analog signals from the accelerator pedal potentiometer 11 to digital signals corresponding thereto and the digital-to-analog converter 15 converts digital signals from the microcomputer 14 to analog signals corresponding thereto.

To the microcomputer 14, a command signal indicative of a selected control mode is directly applied from the control mode selector switch 10; and an analog signal indicative of an accelerator pedal stroke is applied via the analog-to-digital converter 13 from the accelerator pedal potentiometer 11. Further, in a memory section of the microcomputer 14, a plurality of different predetermined accelerator pedal control characteristics representative of relationship between accelerator pedal stroke and throttle valve opening rate as described later in more detail are stored. In response to a control mode command signal from the control mode selector switch 10, a predetermined stored control characteristic is selected; the throttle opening rate $\theta$ corresponding to the detected accelerator pedal stroke S detected by the pedal potentiometer 11 is retrieved in table look-up method; the retrieved throttle valve opening rate $\theta$ is outputted as a throttle valve control signal via the digital-to-analog converter 15 to the servomotor driver circuit 16. In response to this control signal, the servomotor driver circuit 16 feedback-controls the servomotor 17 for driving the throttle valve to the selected opening rate. Because, the opening rate of the throttle valve is detected as revolution angle by the valve potentiometer 18 and feedbacked to the servomotor driver circuit 16.

Further, the selected accelerator pedal control mode is displayed on the control mode display 19 in an appropriate method, optically and numerically or pictorially.

Fig. 4 is a pictorial illustration showing an example of the structure of a throttle valve including the servomotor 17 and the valve potentiometer 18. In a throttle chamber 5, a throttle valve 4 is installed through a throttle valve shaft 4a. The servomotor 17 is installed to the throttle valve shaft 4a and the valve potentiometer 18 is installed integrally with the servomotor 17. Further, a return spring 8 is disposed so

0106360

as to urge the throttle valve 4 to a predetermined engine idling position.

Fig. 5 is also a pictorial illustration showing an example of the structure of an accelerator pedal and the accelerator pedal potentiometer 11. An accelerator pedal 1 is pivotably supported by a bracket which is fixed to a vehicle body at an appropriate position. The accelerator pedal 1 is urged by a return spring 3 to the home position thereof. This pedal potentiometer 11 outputs a signal indicative of pedal stroke, the voltage level of which is proportional to the depression stroke of the accelerator pedal 1. The pedal potentiometer 11 is of linear sliding-contact resistance type, for instance.

A more detailed description of the accelerator pedal control characteristics stored in the memory unit of the microcomputer 14 shown in Fig. 3 will be made with reference to the attached drawings.

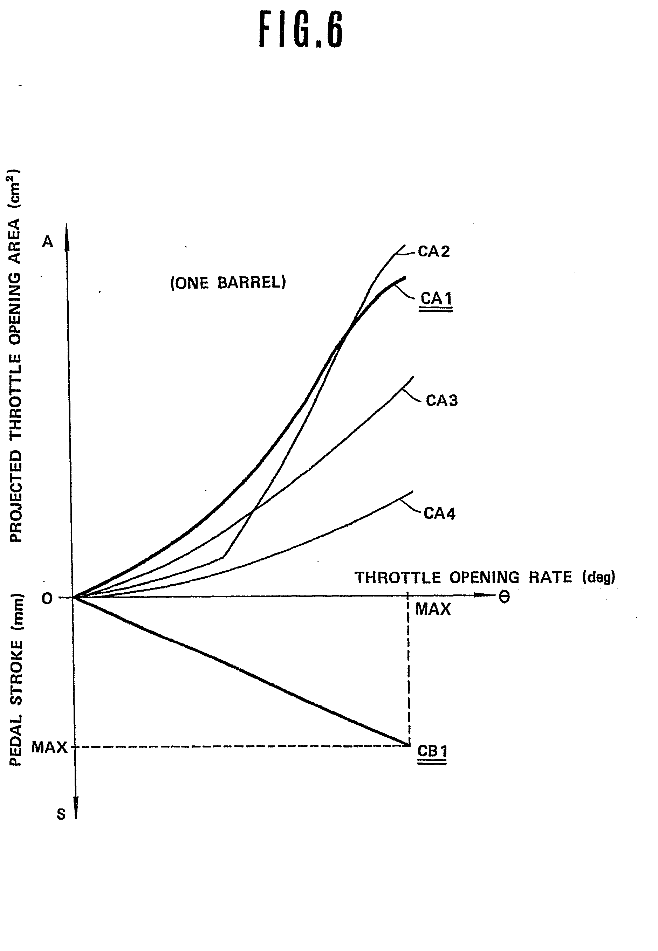

Fig. 6 shows a plurality of accelerator pedal control characteristics indicative of the relationship between accelerator pedal stroke S, throttle valve opening rate $\theta$ and projected throttle valve opening area A for a one-barrel throttle valve device. In Fig. 6, in the case where the throttle valve opening rate $\theta$ increases linearly with increasing the pedal stroke S as shown by the line CB1, the relationship between the throttle valve opening rate $\theta$ and the projected throttle valve opening area A is given by the curve CA1 as in a conventional one-barrel throttle valve device.

In addition to the above-mentioned basic accelerator pedal control characteristic shown by CA1, in the accelerator pedal control system according to the present invention, a plurality of different control characteristics shown by CA2, CA3 and CA4 are preset for the system. That is to say, the curve CA2 corresponds to the accelerator pedal control characteristic for a two-barrel throttle valve device. In the curves CA3 and CA4, the change in projected throttle opening area A with respect to throttle valve opening rate $\theta$ is further reduced for facilitating the accelerator pedal operability when the vehicle is travelling at a low speed on a busy street.

Fig. 6 shows the relationship between throttle valve opening rate $\theta$ and projected throttle valve opening area A under the condition that the throttle valve opening rate $\theta$ increases linearly with increasing accelerator pedal stroke S, in order to facilitate the understanding of accelerator pedal control characteristics. However, in reality, it is impossible to freely change the above relationship between $\theta$ and A as shown by the curves CA2, CA3, and CA4. Therefore, it is necessary to control the relationship between S and $\theta$ so as to correspond to these curves CA2, CA3 and CA4.

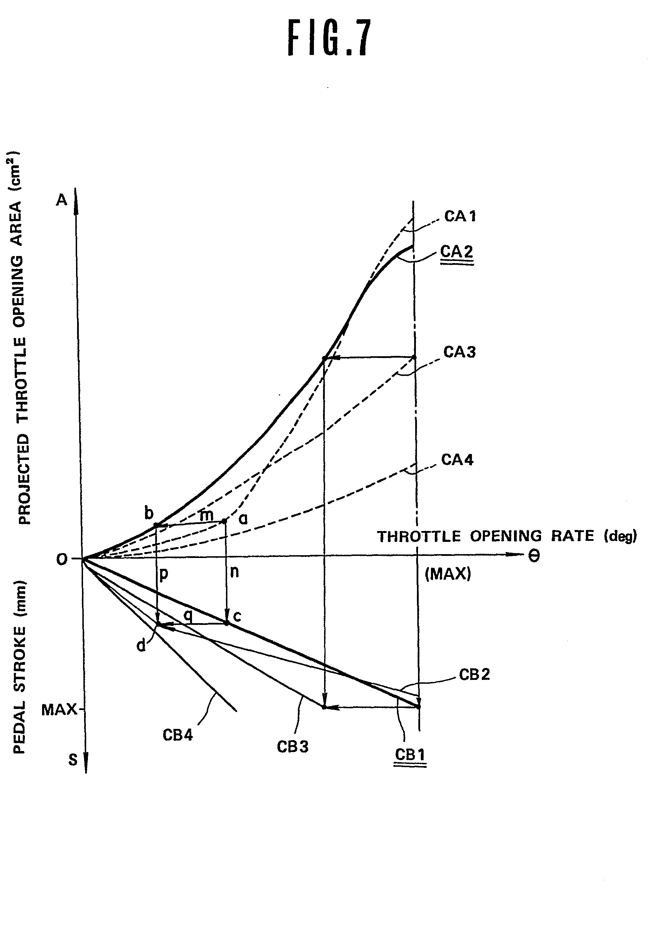

Fig. 7 is a graphical representation for assistance in explaining the method of obtaining the relationship between the accelerator pedal stroke S and the

·throttle valve opening rate Θ (CB2, CB3, or CB4) corresponding to the above control curves (CA2, CA3, or CA4).

To explain the method in more detail, in the case of obtaining the characteristic curve CB2 on the basis of the characteristic curve CA2, a line m is drawn in parallel with the abscissa passing through a point of inflection _a_ of the dashed curve CA2 to obtain a point _b_ of intersection of the line m and the solid curve CA1; another line n is drawn in parallel with the ordinate passing through a point of inflection _a_ of the dashed curve CA2 to obtain a point _c_ of intersection of the line n and the solid line CB1; another line p is drawn in parallel with the ordinate passing through the point _b_ and the other line q is drawn in parallel with the abscissa passing through the point _c_ to obtain a point _d_ of intersection of the lines p and q. The point _d_ thus obtained is to be located on a curve CB2 representative of the relationship between the accelerator pedal stroke S and the throttle valve opening rate Θ, which corresponds to the characteristic curve CA2. Similarly, a plurality of points to be located on the curve CB2 can be obtained. By connecting these points, the curve CB2 can be represented.

In brief, in order to reduce an increase in the projected throttle valve opening area A with respect to an increase in the throttle valve opening rate Θ, it is necessary to reduce an increase in the throttle valve

opening rate θ with respect to an increase in the accelerator pedal stroke S.

The relationship between accelerator pedal stroke S and throttle valve opening rate θ corresponding to the curve CA2, CA3, or CA4 is shown in Fig. 7 as the curve CB2, CB3, or CB4, respectively.

These accelerator pedal control characteristics CB1, CB2, CB3, and CB4 thus obtained and shown in Fig. 7 are stored in a memory unit of the microcomputer 14 in the form of table data as listed below, for instance.

## Table 1

| PEDAL STROKE | SELECTED CONTROL MODE | | | |
|---|---|---|---|---|
| | CB1 (CA1) | CB2 (CA2) | CB3 (CA3) | CB4 (CA4) |
| ps1 | $\theta_{11}$ | $\theta_{12}$ | $\theta_{13}$ | $\theta_{14}$ |
| ps2 | $\theta_{21}$ | $\theta_{22}$ | $\theta_{23}$ | $\theta_{24}$ |
| . | . | . | . | . |
| . | . | . | . | . |
| . | . | . | . | . |
| . | . | . | . | . |
| psn | $\theta_{n1}$ | $\theta_{n2}$ | $\theta_{n3}$ | $\theta_{n4}$ |

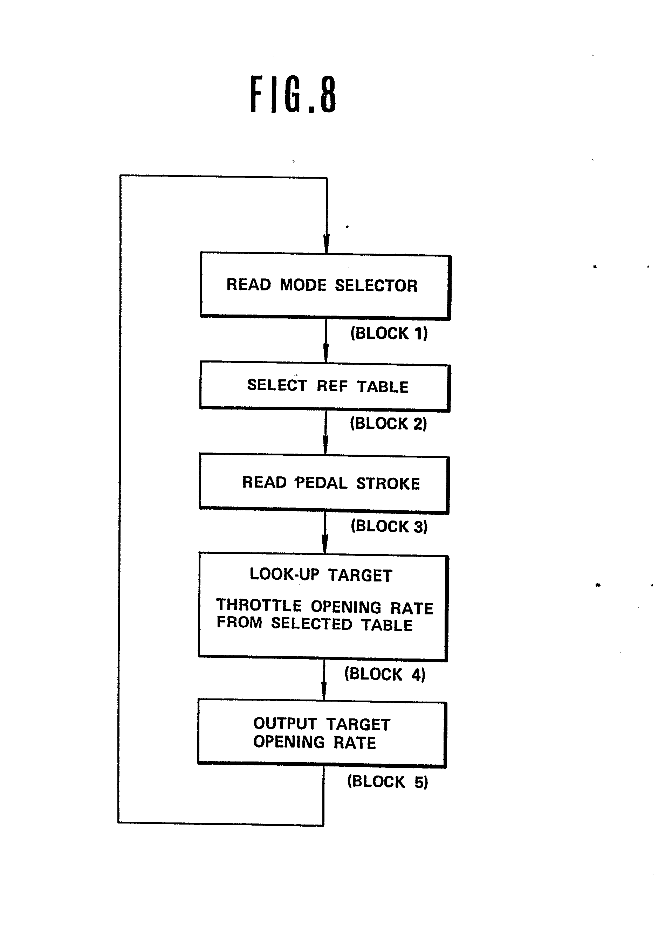

With reference to the control flowchart shown in Fig. 8, the operation of the accelerator pedal control system according to the present invention, in particular, the operation implemented by the microcomputer 14 will be described hereinbelow.

First, while driving the vehicle, the driver selects one of a plurality of accelerator pedal control characteristics determined by the curves CB1, CB2, CB3 and CB4 shown in Fig. 7, for instance, by depressing one of a plurality of control mode selector switches 10. For example, when the driver selects the characteristic determined by the curve CB1 (basic characteristic), a control mode selection command signal from the control mode selector switch 10 is read by the microcomputer 14 (in, block 1). In response to this command signal, the microcomputer 14 selects a reference table (e.g. CB1) representative of relationship between pedal stroke ps1, ps2...psn and opening rate $\theta_{11}$, $\theta_{21}$...$\theta_{n1}$ corresponding to the selection mode CB1 listed in Table 1 (in block 2). Secondly, the microcomputer 14 receives the current accelerator pedal stroke (e.g. ps2) detected by the pedal potentiometer 11 via the A-D converter 13 (in block 3). In response to the detected pedal stroke (ps2), a target throttle valve opening rate (e.g. $\theta_{21}$) corresponding to the stroke (ps2) is retrieved from the selected reference table CB1 in table look-up method and a target throttle valve opening rate is calculated or corrected under consideration of other engine operating conditions, where necessary (in block 4). Thereafter, the target throttle valve opening rate is outputted from the microcomputer 14 to activate the servomotor driver circuit 16. The servomotor 17 is feedback-controlled to set the throttle valve to the target throttle valve opening rate (in block 5). The above control steps from blocks 1 to 5 are so repeatedly implemented that the accelerator pedal control characteristic CB1 selected by the driver may be attained by detecting the magnitude of the accelerator pedal stroke by the pedal potentiometer 11.

In the above description, a case has been explained when the basic characteristic CB1 is selected by the driver by way of example. However, in such a state that the vehicle is travelling at a low speed on a busy street, the driver can select another mode CB2, CB3 or CB4, in which the throttle valve opening rate $\theta$ increases more gently with increasing accelerator pedal stroke S.

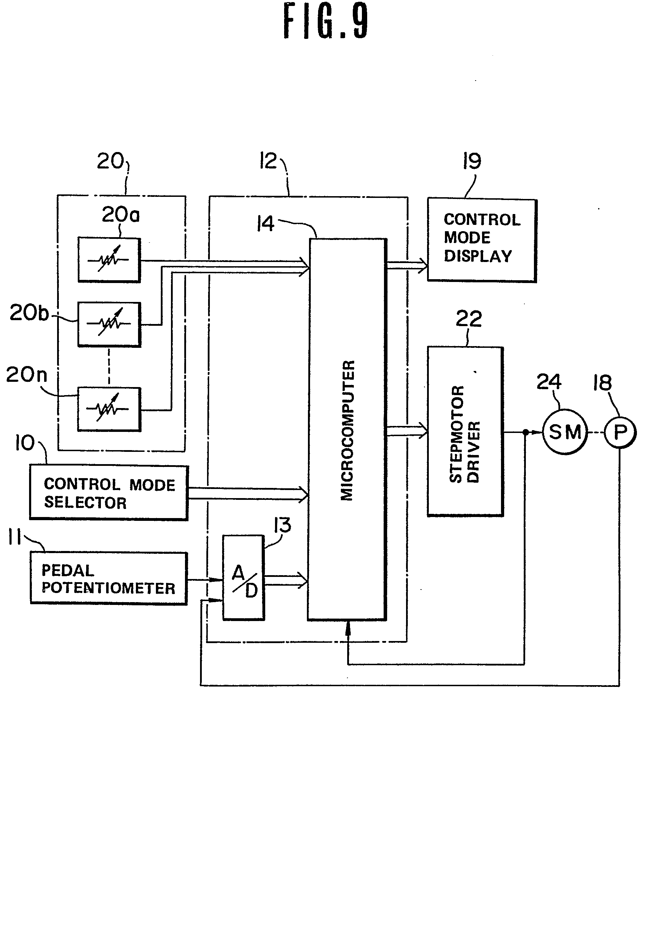

Fig. 9 shows a second embodiment of the accelerator pedal control system for an automotive vehicle according to the present invention. In this embodiment, the accelerator pedal control characteristics can freely be modified by driver's preference for each selected control mode and further a stepmotor is used for driving the throttle value, in place of the servomotor.

In Fig. 9, the accelerator pedal control system comprises, in particular, a control characteristic entry section 20 on the input side of the microcomputer 14, in addition to a control mode selector switch 10, a pedal potentiometer 11 and an analog-to-digital converter 13. In the control characteristic entry section 20, there are provided a plurality of potentiometers 20a, 20b,...20n corresponding to the predetermined number n of divided accelerator pedal stroke steps (e.g. six steps), by which it is possible to preset any desired throttle valve opening rates θ at the predetermined pedal strokes S according to driver's preference, for each control mode.

Similarly to the first embodiment shown in Fig. 3, the control mode selector switch 10 selects, when depressed, one of a plurality of previously stored control characteristics modified by driver's preference; the accelerator pedal potentiometer 11 detects the stroke of the accelerator pedal, the analog-to-digital converter 13 converts an analog pedal potentiometer signal into a digital signal corresponding thereto.

On the other hand, the accelerator pedal control system comprises, in particular, a stepmotor driver circuit 22 and a stepmotor 24 on the output side of the microcomputer 14 in place of the servomotor driver circuit and the servomotor. Since the stepmotor 24 is incorporated with the system, it is possible to eliminate the use of a digital-to-analog converter used for the first embodiment shown in Fig. 3.

Similarly to the first embodiment, the retrieved target throttle valve opening rate is directly outputted as a throttle valve control signal to the stepmotor driver circuit 22. In response to this control signal, the stepmotor driver circuit 22 actuates the stepmotor 24 for driving the throttle valve to the target opening rate. The opening rate of the throttle valve is detected by the valve potentiometer 18 and is feedbacked to the microcomputer 14 via the analog-to-digital converter 13. In this second embodiment, it should be noted that the feedback signal from the valve potentiometer 18 is not applied to the stepmotor driver circuit 22 but to the microcomputer 14 via the analog-to-digital converter 13. Further, the digital signal outputted from the stepmotor driver 22 is also feedbacked to the microcomputer 14 directly for checking the number of pulses. This is because the microcomputer 14 must detect the difference between the target revolution angle and the current stepwise revolution angle of the stepmotor in the normal or reverse direction and output an appropriate control signal to the stepmotor driver circuit 22 in digital control fashion. That is to say, the microcomputer 14 feedback-controls the throttle valve by means of the stepmotor driver circuit 22, the stepmotor 24 and the valve potentiometer 18 in response to the signal indicative of target throttle valve opening rate from the microcomputer 14 and the feedback signal indicative of throttle valve revolution angle, so that the throttle valve reaches the target opening rate.

Further, the selected throttle valve control mode is displayed on the selected mode display 19 in an appropriate method optically and numerically or pictorially.

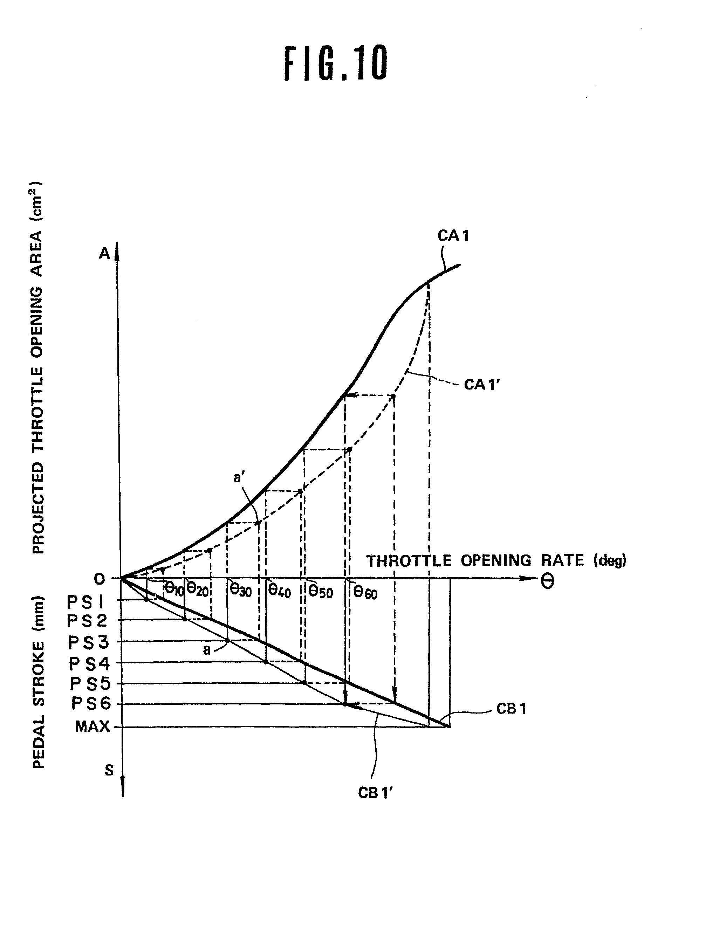

With reference to Fig. 10, the method of presetting the throttle valve opening rates corresponding to each pedal stroke through the control characteristic entry section 20 on the basis of driver's preference will be described hereinbelow. In Fig. 10, a case is represented where six potentiometers are provided for presetting six throttle valve opening rates at six different accelerator pedal strokes ps1 to ps6 by way of example.

A basic control characteristic can be represented by the curve CB1 where the throttle valve opening rate $\theta$ increases linearly with increasing accelerator pedal stroke S and by the curve CA1 where the projected throttle valve opening area A increases with increasing throttle valve opening rate $\theta$. Being different from the above basic control characteristic, the driver can freely preset any desired basic characteristic by his preference as shown by the curves CA1' and CB1' of Fig. 10, for instance, by adjusting the six potentiometers 20a...20f, independently, according to pedal strokes ps1...ps6. Fig. 10 shows the case where the relationship between S and $\theta$ is determined as listed in table 2 below:

Table 2

| PEDAL STROKE | THROTTLE OPENING RATE |
|---|---|
| ps1 | $\Theta_{10}$ |
| ps2 | $\Theta_{20}$ |
| . | . |
| . | . |
| . | . |
| ps6 | $\Theta_{60}$ |

In more detail, the first potentiometer 20a corresponding to the first stroke ps1 is adjusted to $\Theta_{10}$; the second potentiometer 20b corresponding to the second stroke ps2 is adjusted to $\Theta_{20}$; being repeated in like manner. The first adjusted throttle valve opening rate value $\Theta_{10}$ is stored in a first address of the memory section of the microcomputer; the second adjusted value $\Theta_{20}$ is stored in a second address of the memory section; being repeated in like manner.

Therefore, when the driver selects the modified basic control characteristic determined by the curves CB1' and CA1' shown in Fig. 10 by depressing one of a plurality of mode selector switch 10, a control mode selection command signal from the mode selector switch 10 is read by the microcomputer. In response to this command signal, the microcomputer 14 selects the reference table 2 of modified throttle valve opening rates $\Theta_{10}$, $\Theta_{20}$, ...$\Theta_{60}$. Thereafter, when the microcomputer 14 reads the first accelerator pedal

stroke ps1 detected by the pedal potentiometer 11, the first throttle valve opening rate $\theta_{10}$ corresponding to the first stroke ps1 is retrieved from the selected reference table 2 and the first target throttle valve opening rate $\theta_{10}$ is calculated and corrected to activate the stepmotor 22, so that the throttle valve 6 is opened to the target throttle valve opening rate. Similarly, when the microcomputer 14 reads the second accelerator pedal stroke ps2, the second throttle valve opening rate $\theta_{20}$ corresponding to ps2 is reetrieved from the selected reference table 2 to calculate the second target throttle valve opening rate, being repeated in like manner.

Further, in Fig. 10, the horizontal and vertical dashed lines indicate the method of obtaining the relationship CB1' between the accelerator pedal stroke S and the throttle valve opening rate $\theta$, which corresponds to the curves CA1', as already explained in great detail with reference to Fig. 7.

The accelerator pedal control system according to the present invention has been described of the case when the system is applied to a one-barrel throttle device by way of example. However, it is of course possible to apply this system according to the present invention to a two-barrel throttle device. Further, potentiometers have been adopted for detecting the stroke of the accelerator pedal and the revolution angle of the throttle valve by way of example. However, without being limited to these analog detecting means, it is of course possible to adopt a pulse sensor which outputs a pulse signal for each unit displacement of the pedal stroke or valve opening angle and a counter for counting the number of pulse signals outputted from the pulse sensor, that is, in digital detection fashion. Further, the number of selectable accelerator pedal control characteristics is four of CB1, CB2, CB3 and CB4 in the first embodiment shown in Fig. 3 and the number of the presettable accelerator pedal strokes is six of ps1, ps2, ps3, ps4, ps5 and ps6 in the second embodiment shown in Fig. 9. However, without being limited to these number, it is of course possible to determine any desired number of selectable characteristics or presettable strokes.

As described above, in the accelerator pedal control system for an automotive vehicle according to the present invention, since a plurality of different accelerator pedal control characteristics representative of relationship between accelerator pedal stroke S and throttle valve opening rate θ are previously stored and since any desired control characteristic can be selected by depressing one of control mode selector switch freely by driver's preference, it is possible to accelerate the vehicle in accordance with a desired accelerator pedal control characteristic by driver's preference or according to vehicle travelling conditions. For instance, when the vehicle is travelling at a relatively low speed on a busy street and the accelerator pedal and the brake pedal are both repeatedly depressed alternately, an appropriate control characteristic such as CB4 on which the throttle valve opening rate increases relatively gently with increasing accelerator pedal stroke can be selected, thus the low-speed operability of the accelerator pedal being improved. On the other hand, when the vehicle is travelling at a relatively high speed on a highway and a quick acceleration is required to avoid accident, an appropriate control characteristic such as CB1 on which the throttle valve opening rate increases relatively abruptly with increasing accelerator pedal stroke can be selected, thus the high-speed operability of the accelerator pedal being improved.

Furthermore, since the accelerator pedal control characteristics can be modified freely by driver's preference by adjusting the potentiometers in the second embodiment, it is possible to provide more appropriate accelerator pedal control characteristics for the driver.

It will be understood by those skilled in the art that the foregoing description is in terms of a preferred embodiment of the present invention wherein various changes and modifications may be made without departing from the spirit and scope of the invention, as set forth in the appended claims.

0106360

CLAIMS

1. An accelerator pedal control system for an automotive vehicle for controlling the opening rate of a throttle valve according to the stroke of an accelerator pedal, c h a r a c t e r i z e d by
(a) means (14) for storing a plurality of different predetermined control characteristics representative of relationship between throttle valve opening rate and accelerator pedal stroke;
(b) means (10) for selecting a desired control characteric from the stored different control characteristics;
(c) means (11) for detecting the stroke of the accelerator pedal;
(d) means (14) for determining throttle valve opening rates corresponding to the detected accelerator pedal stroke S on the basis of the stored control characteristic selected by said selecting means; and
(e) means (16,17,22,24) for driving the throttle valve to the determined throttle valve opening rate for each detected accelerator pedal stroke.

2. An accelerator pedal control system for an automotive vehicle as set forth in claim 1, c h a r a c t e-

r i z e d by means (20) for manually modifying the different control characteristics indicative of relationship between throttle valve opening rate and accelerator pedal stroke, each throttle valve opening rate being preset for each accelerator pedal stroke in each control characteristic, the modified control characteristics being stored in said storing means.

3. An accelerator pedal control system for an automotive vehicle as set forth in claim 1, c h a r a c t e r i z e d by means (19) for displaying the predetermined control characteristic selected through said selecting means.

4. An accelerator pedal control system for an automotive vehicle as set forth in claim 1, c h a r a c t e r i z e d in that said storing means and said determining means are a microcomputer (14).

5. An accelerator pedal control system for an automotive vehicle as set forth in claim 1, c h a r a c t e r i z e d in that said detecting means is a potentiometer (11).

6. An accelerator pedal control system for an automotive vehicle as set forth in claim 1, c h a r a c t e r i z e d in that said driving means comprises:

(a) a servomotor (17) for actuating the throttle valve;

(b) a throttle potentiometer (18) for detecting the revolution angle of the throttle valve;

(c)   an digital-to-analog converter (15) for converting the digital signal indicative of a target throttle valve opening rate determined by said determining means into an analog signal corresponding thereto; and

(d)   a servomotor driver circuit (16) for feedback-controlling said servomotor to the target throttle valve opening rate in response to the converted analog signal indicative of target throttle valve opening rate and the feedbacked signal indicative of throttle valve revolution angle detected by said throttle potentiometer.


7.   An accelerator pedal control system for an automotive vehicle as set forth in claim 1, c h a r a c t e r i z e d in that said driving means comprises:

(a)   a stepmotor (24) for actuating the throttle valve;

(b)   a throttle potentiometer for detecting the revolution angle of the throttle valve; and

(c)   a stepmotor driver circuit (22) for actuating said stepmotor to the target throttle valve opening rate in response to the signal indicative of the target throttle valve opening rate determined by said determining means and the feedbacked signal indicative of throttle valve revolution angle detected by said throttle potentiometer.


8.   An accelerator pedal control system for an automotive vehicle as set forth in claim 2, c h a r a c t e r i z e d in that said different control characteristic modifying means are a plurality of potentiometers (20a,20b...).

Cl06360

9.  An accelerator pedal control system for an automotive vehicle for controlling the opening rate of a throttle valve according to the stroke of an accelerator pedal, c h a r a c t e r i z e d  by:

(a)  a plurality of control mode selector switches (10) for selecting a desired control characteristic representative of relationship between throttle valve opening rate and accelerator pedal stroke and outputting a selected control mode command signal;

(b)  a pedal potentiometer (11) for detecting the stroke of the accelerator pedal and outputting analog signals corresponding thereto;

(c)  an analog-to-digital converter (13) responsive to said pedal potentiometer for converting the analog signal indicative of pedal stroke into a digital signal corresponding thereto;

(d)  a microcomputer (14) responsive to said control mode selector switches and said analog-to-digital converter for storing a plurality of different predetermined control characteristics representative of relationship between throttle valve opening rate and accelerator pedal stroke, selecting a desired control characteristic from the stored different control characteristics in response to the selector control mode command signal, receiving the digital pedal stroke signal from said analog-to-digital converter, retrieving a predetermined target throttle valve opening rate corresponding to the received pedal stroke from the selected control characteristic in table look-up method, and outputting a digital signal indicative the retrieved target throttle valve opening rate;

(e)  a digital-to-analog converter (15) responsive to said microcomputer for converting the digital signal indicative of the target throttle valve opening rate into an analog signal corresponding thereto and outputting the analog target opening rate signal;

(f)  a servomotor (17) mechanically connected to the throttle valve for actuating the throttle valve;

(g)  a throttle valve potentiometer mechanically connected to the throttle valve for detecting the revolution angle of the throttle valve and outputting a feedback signal indicative of throttle valve revolution angle;

(h)  a servomotor driver circuit (16) responsive to said digital-to-analog converter and said throttle valve potentiometer for feedback-controlling and said servomotor to the target throttle valve opening rate in response to the converted analog signal indicative of target throttle valve opening rate and the feedbacked signal indicative of throttle valve revolution angle detected by said throttle valve potentiometer; and

(i)  a selected mode display (19) responsive to said microcomputer for displaying the selected control characteristic pictorially or numerically.

10.  An accelerator pedal control system for an automotive vehicle for controlling the opening rate of a throttle valve according to the stroke of an accelerator pedal,

c h a r a c t e r i z e d  by:

(a)   a plurality of potentiometers (20a,20b...) for modifying a plurality of control characteristics representative
of relationship between throttle valve opening rate and
accelerator pedal stroke for each accelerator pedal control
mode, each of said modifying potentiometers being allocated
to each of a plurality of accelerator pedal strokes, respectively;

(b)   a plurality of control mode selector switches (10) for
selecting one of modified control characteristics and outputting a selected control mode command signal;

(c)   a pedal potentiometer (11) for detecting the stroke
of the accelerator pedal and outputting analog signals corresponding thereto;

(d)   an analog-to-digital converter (13) responsive to
said pedal potentiometer for converting the analog signal
indicative of pedal stroke into a digital signal corresponding thereto;

(e)   a microcomputer (14) responsive to said modifying potentiometers, said control mode selector switches and said
analog-to-digital converter for storing a plurality of
different control characteristics modified through said
modifying potentiometers, selecting a desired control
characteristic from the stored different control characteristics in response to the selector control mode command
signal, receiving the digital pedal stroke signal from
said analog-to-digital converter, retrieving a stored
throttle valve opening rate corresponding to the received pedal stroke from the selected control characteristic in table look-up method, and outputting a digital signal indicative of the retrieved target throttle valve opening rate;

(f) a stepmotor (24) mechanically connected to the throttle valve for actuating the throttle valve;

(g) a throttle valve potentiometer (18) mechanically connected to the throttle valve for detecting the revolution angle of the throttle valve and outputting a feedback signal indicative of throttle valve revolution angle to said microcomputer via said analog-to-digital converter;

(h) a stepmotor driver circuit (22) responsive to said microcomputer for controlling said stepmotor to the target throttle valve opening rate in response to the signal from said microcomputer obtained feedback-controlling the target throttle opening rate in response to the feedback signal from said throttle valve potentiometer; and

(i) a selected mode display (19) responsive to said microcomputer for displaying the selected characteristic pictorially of numerically.

11. A method of controlling the opening rate of a throttle valve according to the stroke of an accelerator pedal, c h a r a c t e r i z e d by the following steps:

(a) storing a plurality of different predetermined control characteristics representative of relationship between throttle valve opening rate and accelerator pedal stroke;

(b) selecting a desired control characteristic from the stored different control characteristics;

- 32 -

0106360

(c) detecting the stroke of the accelerator pedal;

(d) retrieving a target throttle valve opening rate corresponding to the detected accelerator pedal stroke from the selected control characteristic in table look-up method; and

(e) driving the throttle valve to the retrieved target throttle valve opening rate.

12. A method of controlling the opening rate of a throttle valve according to the stroke of an accelerator pedal as set forth in claim 11, c h a r a c t e r i z e d  by the step of manually modifying the different control characteristics indicative of relationship between throttle valve opening rate and accelerator pedal stroke, each throttle valve opening rate being preset for each accelerator pedal stroke in each control characteristic, before storing the different control characteristics.

13. A method of controlling the opening rate of a throttle valve according to the stroke of an accelerator pedal as set forth in claim 11, c h a r a c t e r i z e d  by the step of displaying the modified and selected control characteristic.

1/7

# FIG.1
## (PRIOR ART)

# FIG.2
## (PRIOR ART)

PROJECTED THROTTLE OPENING AREA (cm²)

MAX

CA1
(ONE BARREL)

CA2
(TWO BARREL)

THROTTLE OPENING RATE (deg)

O

35°

80°
(MAX)

PEDAL STROKE (mm)

CB1

CB2

MAX

# FIG.3

CONTROL MODE SELECTOR — 10

PEDAL POTENTIOMETER — 11

A/D — 13

MICROCOMPUTER — 14

D/A — 15

12

CONTROL MODE DISPLAY — 19

SERVOMOTOR DRIVER — 16

M — 17

P — 18

# FIG.4

# FIG.5

# FIG.6

FIG.7

# FIG.8

```
READ MODE SELECTOR
                        (BLOCK 1)

SELECT REF TABLE
                        (BLOCK 2)

READ PEDAL STROKE
                        (BLOCK 3)

LOOK-UP TARGET
THROTTLE OPENING RATE
FROM SELECTED TABLE
                        (BLOCK 4)

OUTPUT TARGET
OPENING RATE
                        (BLOCK 5)
```

6/7

# FIG. 9

# FIG.10